# FASCICULE DE BREVET EUROPEEN

(11) **EP 2 259 030 B1**
(45) Date de publication et mention de la délivrance du brevet: **16.05.2018**
(21) Numéro de dépôt: 09305508.5
(22) Date de dépôt: 03.06.2009
(51) Int. Cl.: G01F 15/14, G01F 3/08

(54) **Compteur de fluide, en particulier d'eau**
Flüssigkeitszähler, insbesondere für Wasser
Fluid meter, in particular of water

(43) Date de publication de la demande: 08.12.2010
(73) Titulaire: Itron Global SARL, Liberty Lake WA 99019 (US)
(72) Inventeur: Chaudy, Alain, 71000, MACON (FR); Catherin, Daniel, 01570, MANZIAT (FR); Bouzid, Tarek, 71000, MACON (FR)
(74) Mandataire: Howson, Richard Giles Bentham

(56) Documents cités:
- EP-A- 1 111 350
- EP-A- 1 326 061
- DE-U1- 29 511 030
- DE-U1- 29 902 509

## Description

L'invention concerne un compteur de fluide, en particulier d'eau.

Elle se rapporte plus précisément à un compteur de fluide comportant une bâche contenant un dispositif de mesure et un totalisateur contenant entre autre un système de comptage du débit de fluide et fixé sur la bâche.

Il est connu comme précisé dans le document de brevet DE 102 38 416 de fixer le totalisateur sur la bâche par vissage. Pour ce faire, la bâche comporte un filetage externe et le capot du totalisateur comporte un taraudage interne et le capot du totalisateur est vissé sur le filetage de la bâche. La demande de brevet EP 1 326 061 divulgue un compteur de fluide selon le préambule de la revendication 1, le document DE 299 02 509 U1 également. L'invention résout le problème de plombage d'un tel compteur. En effet, selon cet art antérieur, il est facile de dévisser le capot du totalisateur et de désolidariser le totalisateur et donc le système de comptage de la bâche et ainsi de frauder.

Pour ce faire, l'invention concerne un compteur de fluide, en particulier d'eau comportant une bâche contenant un dispositif de mesure et un totalisateur contenant entre autre un système de comptage du débit de fluide et fixé sur la bâche, par liaison de son capot avec un filetage de ladite bâche, caractérisé en ce qu'il comporte une bague de fixation sur laquelle ledit capot du totalisateur est bloqué en translation et pourvue d'un taraudage coopérant avec ledit filetage de la bâche et une bague de plombage recouvrant extérieurement ladite bague de fixation.

Selon un mode de réalisation préféré de l'invention, ledit capot du totalisateur est encliqueté dans une rainure annulaire de ladite bague de fixation.

De préférence, ladite bague de plombage comporte une collerette de recouvrement du bord libre dudit capot du totalisateur.

Ladite bague de plombage peut être bloquée en rotation sur ladite bâche.

Dans ce cas, avantageusement, ladite bague de plombage comporte au moins une rainure emboîtée sur au moins un cran de blocage en rotation porté par ladite bâche.

L'invention s'applique en particulier à un compteur, dont ladite bâche comporte une sortie ou une entrée de fluide réalisée au moyen d'un canal connecté directement latéralement à l'intérieur de la bâche puis dévié vers le bas en une forme de U pour être finalement vertical et coaxial à la bâche.

Dans ce cas, selon l'invention, ladite bâche est constituée d'une première et d'une seconde parties assemblées après moulage, ladite seconde partie étant constituée d'un bouchon de forme circulaire fermant ladite base de la forme en U du canal et étant vissé sur un filetage correspondant réalisé sur ladite première partie, et en ce que ledit bouchon est bloqué en rotation par ladite bague de plombage.

De préférence, ledit bouchon comporte une extension radiale emboîtée dans une rainure de ladite bague de plombage.

Ledit bouchon peut être soudé sur ladite bâche.

Dans ce cas, de préférence, ledit bouchon est soudé sur au moins deux pattes agencées sur ladite première partie.

Ladite bâche est de préférence en matière plastique.

L'invention est décrite ci-après plus en détail à l'aide de figures ne reproduisant que des modes de réalisation préférés de l'invention.
La figure 1 est une vue de face d'un compteur d'eau conforme à l'invention, comportant une bâche à tronçons de conduite alignées.
La figure 2 est une vue partielle en coupe verticale de ce compteur.
La figure 3 est une autre vue partielle en coupe verticale de ce compteur.
La figure 4 est une vue en perspective d'une bague de plombage conforme à l'invention.
La figure 5 est une vue partielle en coupe verticale de ce compteur.
La figure 6 est une vue en coupe verticale d'un compteur d'eau conforme à l'invention, comportant une bâche concentrique.
Les figures 7 et 8 sont des vues partielles en perspective de ce compteur.

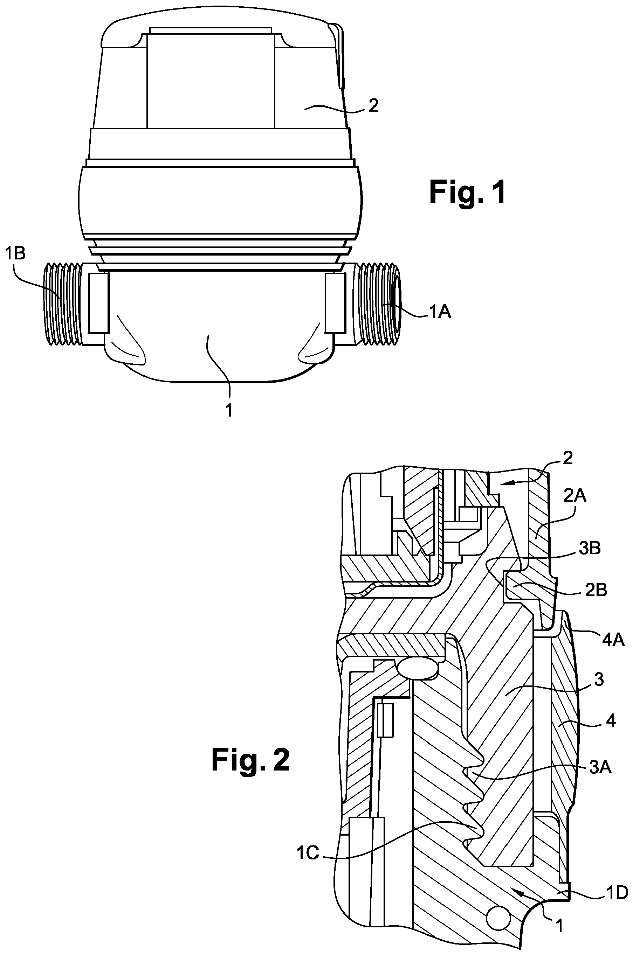

La figure 1 représente un compteur comportant une bâche 1 à tronçons de conduite 1A, 1B alignées.

Le compteur de fluide, en particulier d'eau comporte donc cette bâche 1, de préférence en matière plastique, contenant un dispositif de mesure et un totalisateur 2 contenant entre autre un système de comptage du débit de fluide et fixé sur la bâche 1, par liaison de son capot avec un filetage de la bâche. Le capot comporte quant à lui un taraudage.

Cette fixation est illustrée sur la figure 2.

Le compteur comporte une bague de fixation 3 sur laquelle le capot 2A du totalisateur est bloqué en translation au moyen de clips 2B encliquetés dans une rainure annulaire 3B de la bague de fixation 3. La bague de fixation 3 est pourvue d'un taraudage 3A coopérant avec le filetage 1C de la bâche 1 et une bague de plombage 4 recouvre extérieurement la bague de fixation 3.

La bague de plombage 4 comporte une collerette 4A de recouvrement du bord libre du capot 2A du totalisateur.

Le montage d'un tel compteur s'effectue de la façon suivante.

Une fois le dispositif de mesure monté dans la bâche 1, la bague de fixation 3 est vissée sur la bâche 1, puis la bague de plombage 4 est mise en place en recouvrement de cette bague de fixation 3. Le totalisateur 2 est alors monté et son capot 2A est encliqueté sur la bague de fixation 3.

Un tel agencement assure le plombage du compteur contre les fraudes.

En effet, il est difficile d'accéder de l'extérieur directement à la bague de fixation 3 puisqu'elle est complètement recouverte par la bague de plombage 4. Il est donc difficile de dévisser la bague de fixation 3 et de démonter le totalisateur 2 sans destruction visible de cette bague de plombage 4.

Par ailleurs, la collerette 4A de la bague de plombage 4 empêche de plus une intervention avec un outil tel qu'un tournevis pour sortir les clips 2B du capot 2A et démonter le capot et le totalisateur par déclippage de ces clips de la rainure 3B, sans détérioration de la bague de plombage 4.

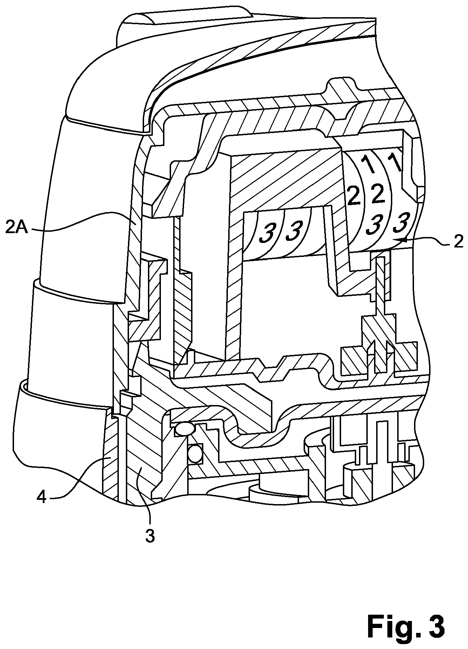

Comme visible sur la figure 3, le capot 2A est dimensionné de telle sorte qu'il assure le maintien en appui supérieur du totalisateur 2, lorsque ce capot 2A est clippé sur la bague de fixation 3.

Telle qu'actuellement décrite, la bague de plombage 4 peut tourner librement sur l'épaulement 1D de la bâche 1.

On peut donc, en utilisant un serre-joint ou une pince, presser radialement sur la bague de plombage 4 et, par sa déformation résultante, serrer également la bague de fixation 3 et la dévisser.

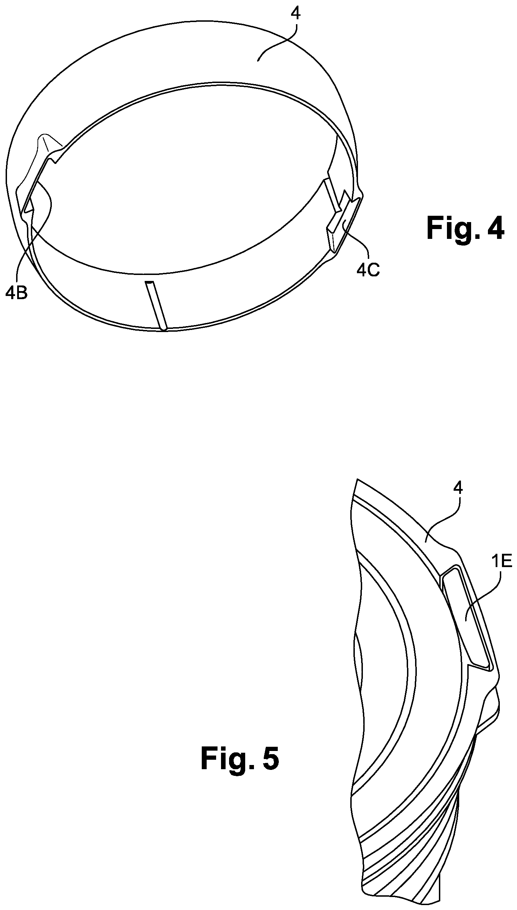

Pour assurer le plombage lors de cet autre type de fraude, la bague de plombage peut également être bloquée en rotation sur la bâche 1, comme illustré sur les figures 4 et 5.

La bague de plombage 4 comporte alors au moins une rainure 4B, 4C emboîtée sur au moins un cran 1E de blocage en rotation porté par la bâche 1. Ces assemblages en queue d'aronde sont ici au nombre de deux, diamétralement opposés.

Lors d'une fraude avec serre-joint ou pince telle que précisée ci-dessus, ces crans 1E sont cassés et la fraude est ainsi détectée.

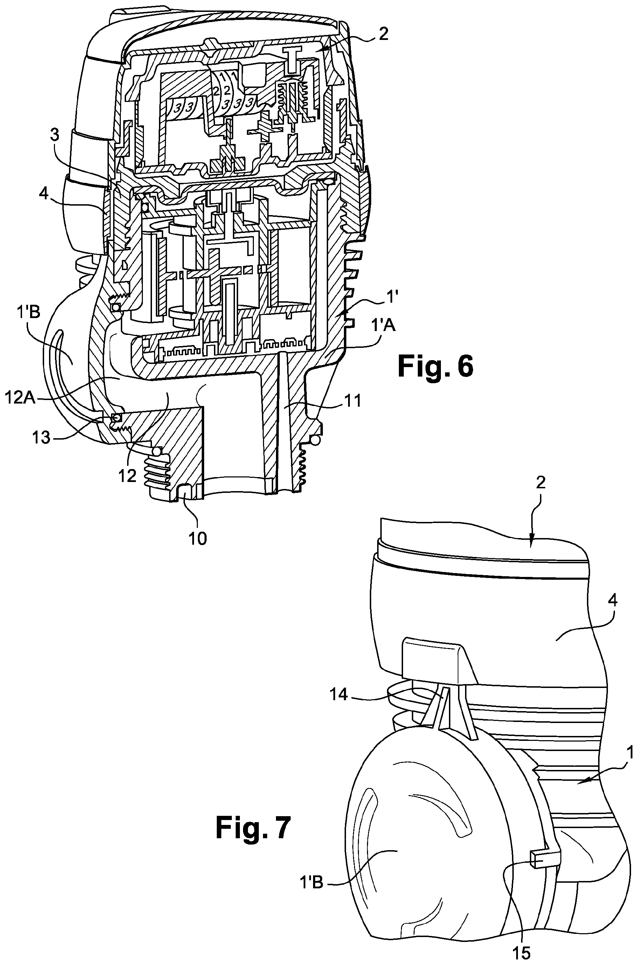

Le compteur précédemment décrit est de type à bâche à conduites alignée. L'invention trouve également application à un compteur à bâche concentrique tel que représenté sur la figure 6.

Ce type de bâche concentrique est standardisée sous la norme européenne EN-14154.

Cette bâche l'est connectée à une conduite inférieure et son entrée d'eau est réalisée au moyen d'un canal annulaire 10 connectée à un canal vertical latéral 11 débouchant à l'intérieur de bâche. Sa sortie d'eau est quant à elle réalisée au moyen d'un canal 12 connecté directement latéralement à l'intérieur de la bâche puis dévié vers le bas en une forme de U 12A pour être finalement vertical et coaxial à la bâche.

Il est possible selon le dispositif de mesure utilisé d'inverser entrée et sortie de la bâche. En d'autres termes, le canal 12 peut également constituer l'entrée d'eau et le canal annulaire 10 et le canal vertical 11 constituer la sortie de la bâche.

La bâche l'est de préférence en matière plastique et constituée d'une première et d'une seconde parties assemblées après moulage.

La seconde partie latérale 1'B forme la base de ladite forme de U du canal et est constituée d'un bouchon de forme circulaire en matière plastique et fermant la base de la forme en U 12A du canal. Ce bouchon 1'B est taraudé et est vissé sur un filetage correspondant réalisé sur la première partie 1'A constituant le reste de la bâche.

Un joint d'étanchéité 13 est intercalé entre le bouchon 1'B et la première partie 1'A, afin d'assurer l'étanchéité après vissage du bouchon.

Le filetage est réalisé sur une bride circulaire latérale de la première partie 1'A qui est pourvue d'un épaulement interne sur lequel vient buter le joint d'étanchéité 13. Le bouchon 1'B quant à lui comporte un taraudage interne vissé sur le filetage de la première partie 1'A et une bride circulaire qui retient le joint d'étanchéité 13, la bride latérale de la première partie 1'A étant encastrée entre ce taraudage et cette bride circulaire du bouchon 1'B.

Selon le mode de liaison utilisée du bouchon 1'B et de la première partie 1'A, le taraudage peut être réalisé sur la première partie 1'A et le filetage sur le filetage sur le bouchon 1'B.

L'agencement de bague de fixation 3 et de bague de plombage 4 est en tous points identiques au premier mode de réalisation précédemment décrit.

Selon l'invention, ledit bouchon 1'B est également bloqué en rotation par la bague de plombage 4.

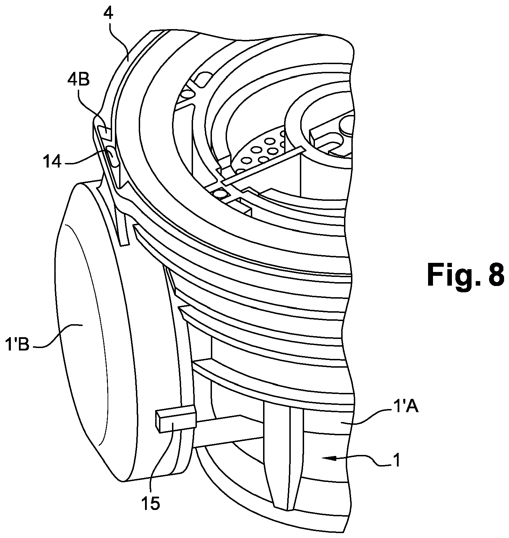

Comme bien visible sur les figures 7 et 8, le bouchon 1'B comporte une extension radiale 14 emboîtée dans une rainure 4B ou 4C de la bague de plombage 4.

Ainsi, outre les fonctions de plombage déjà précisées, la bague de plombage 4 empêche également le dévissage du bouchon 10B, sauf à détériorer l'extension 14 ou la bague de plombage 4.

De plus le bouchon 1'B peut être soudé sur la bâche 1' sur au moins deux pattes 15 agencées sur la première partie 1'A, à proximité du taraudage de cette première partie 1'A sur lequel est vissé le bouchon 1'B.

## Revendications

1. Compteur de fluide, en particulier d'eau comportant une bâche (1, 1') contenant un dispositif de mesure et un totalisateur (2) contenant entre autre un système de comptage du débit de fluide et fixé sur la bâche, par liaison de son capot (2B) externe avec ladite bâche, compteur comportant une bague de fixation (3) sur laquelle ledit capot (2A) du totalisateur est bloqué en translation et **caractérisé en ce que** ladite bague de fixation (3) est pourvue d'un taraudage (3A) coopérant avec un filetage (1C) de la bâche et le compteur comporte également une bague de plombage (4) recouvrant extérieurement ladite bague de fixation (3).

2. Compteur selon la revendication précédente, **caractérisé en ce que** ledit capot (2A) du totalisateur est encliqueté dans une rainure annulaire (3B) de ladite bague de fixation (3).

3. Compteur selon l'une des revendications précédentes, **caractérisé en ce que** ladite bague de plombage (4) comporte une collerette (4A) de recouvrement du bord libre dudit capot (2A) du totalisateur.

4. Compteur selon l'une des revendications précédentes, **caractérisé en ce que** ladite bague de plombage (4) est bloquée en rotation sur ladite bâche (1, 1').

5. Compteur selon la revendication précédente, **caractérisé en ce que** ladite bague de plombage (4) comporte au moins une rainure (4B, 4C) emboîtée sur au moins un cran de blocage (1E) en rotation porté par ladite bâche.

6. Compteur selon l'une des revendications précédentes, dont ladite bâche (1') comporte une sortie ou une entrée de fluide réalisée au moyen d'un canal (12) connecté directement latéralement à l'intérieur de la bâche puis dévié vers le bas en une forme de U (12A) pour être finalement vertical et coaxial à la bâche, **caractérisé en ce que** ladite bâche (1') est constituée d'une première et d'une seconde parties (1'A, 1'B) assemblées après moulage, ladite seconde partie (1'B) étant constituée d'un bouchon de forme circulaire fermant ladite base de la forme en U (12A) du canal et étant vissé sur un filetage correspondant réalisé sur ladite première partie (1'A), et **en ce que** ledit bouchon est bloqué en rotation par ladite bague de plombage (4).

7. Compteur selon la revendication précédente, **caractérisé en ce que** ledit bouchon (1'B) comporte une extension radiale (14) emboîtée dans une rainure de ladite bague de plombage (4).

8. Compteur selon la revendication 6 ou 7, **caractérisé en ce que** ledit bouchon (1'B) est soudé sur ladite bâche.

9. Compteur selon la revendication précédente, **caractérisé en ce que** ledit bouchon (1'B) est soudé sur au moins deux pattes (15) agencées sur ladite première partie (1'A).

10. Compteur selon l'une des revendications précédentes, **caractérisé en ce que** ladite bâche (1, 1') est en matière plastique.

## Patentansprüche

1. Flüssigkeitszähler, insbesondere für Wasser, der einen Behälter (1, 1') umfasst, der eine Messvorrichtung und einen Summierer (2) enthält, der unter anderem ein Zählsystem des Flüssigkeitsdurchflusses enthält und auf dem Behälter durch Verbindung seiner externen Haube (2B) mit dem Behälter befestigt ist, wobei der Zähler einen Befestigungsring (3) umfasst, auf dem die Haube (2A) des Summierers in Verschiebung blockiert ist, und **dadurch gekennzeichnet, dass** der Befestigungsring (3) mit einem Innengewinde (3A) versehen ist, das mit einem Außengewinde (1C) des Behälters zusammenwirkt, und dass der Zähler auch einen Plombierungsring (4) umfasst, der den Befestigungsring (3) außen abdeckt.

2. Zähler nach dem vorhergehenden Anspruch, **dadurch gekennzeichnet, dass** die Haube (2A) des Summierers in eine ringförmige Nut (3B) des Befestigungsrings (3) eingerastet ist.

3. Zähler nach einem der vorhergehenden Ansprüche, **dadurch gekennzeichnet, dass** der Plombierungsring (4) einen Kragen (4A) zum Abdecken des freien Rands der Haube (2A) des Summierers umfasst.

4. Zähler nach einem der vorhergehenden Ansprüche, **dadurch gekennzeichnet, dass** der Plombierungsring (4) auf dem Behälter (1, 1') drehfest ist.

5. Zähler nach dem vorhergehenden Anspruch, **dadurch gekennzeichnet, dass** der Plombierungsring (4) mindestens eine Nut (4B, 4C) umfasst, die auf mindestens einer Raste (1E) zum Drehungsblockieren, die von dem Behälter getragen wird, verschachtelt ist.

6. Zähler nach einem der vorhergehenden Ansprüche, dessen Behälter (1') einen Flüssigkeitseingang oder -ausgang umfasst, der mittels eines Kanals (12) hergestellt ist, der direkt seitlich mit dem Inneren des Behälters verbunden und dann nach unten in U-Form (12A) abgelenkt ist, um schließlich vertikal und zu dem Behälter koaxial zu sein, **dadurch gekennzeichnet, dass** der Behälter (1') aus einem ersten und einem zweiten Teil (1'A, 1'B) besteht, die nach dem Formen zusammengefügt werden, wobei der zweite Teil (1'B) aus einem Stopfen in Kreisform besteht, der die Basis der U-Form (12A) des Kanals schließt und auf ein entsprechendes Außengewinde geschraubt ist, das auf dem ersten Teil (1'A) hergestellt ist, und dass der Stopfen durch den Plombierungsring (4) drehfest ist.

7. Zähler nach dem vorhergehenden Anspruch, **dadurch gekennzeichnet, dass** der Stopfen (1'B) eine radiale Erweiterung (14) umfasst, die in einer Nut des Plombierungsrings (4) verschachtelt ist.

8. Zähler nach Anspruch 6 oder 7, **dadurch gekennzeichnet, dass** der Stopfen (1'B) auf den Behälter geschweißt ist.

9. Zähler nach dem vorhergehenden Anspruch, **dadurch gekennzeichnet, dass** der Stopfen (1'B) auf mindestens zwei Pratzen (15), die auf dem ersten Teil (1'A) eingerichtet sind, geschweißt ist.

10. Zähler nach einem der vorhergehenden Ansprüche, **dadurch gekennzeichnet, dass** der Behälter (1, 1') aus Kunststoff besteht.

## Claims

1. Fluid, particularly water, meter comprising a casing (1, 1') containing a measurement device and a totalizer (2) containing, inter alia, a system for metering the fluid flow rate and fixed to the casing, by connecting its external cap (2B) to the said casing, the meter comprising a fixing ring (3) on which the said cap (2A) of the totalizer is immobilized in terms of translational movement and **characterized in that** the said fixing ring (3) is provided with a tapped thread (3A) engaging with a screw thread (1C) of the casing and the meter also comprises a tamperproofing ring (4) externally covering the said fixing ring (3).

2. Meter according to the preceding claim, **characterized in that** the said cap (2A) of the totalizer is clipped into an annular groove (3B) of the said fixing ring (3).

3. Meter according to one of the preceding claims, **characterized in that** the said tamperproofing ring (4) comprises a collar (4A) to overlap the free edge of the said cap (2A) of the totalizer.

4. Meter according to one of the preceding claims, **characterized in that** the said tamperproofing ring (4) is immobilized in terms of rotational movement on the said casing (1, 1').

5. Meter according to the preceding claim, **characterized in that** the said tamperproofing ring (4) comprises at least one groove (4B, 4C) fitted over at least one rotation proofing catch (1E) borne by the said casing.

6. Meter according to one of the preceding claims, of which the said casing (1') comprises a fluid outlet or inlet produced by means of a canal (12) connected directly laterally to the inside of the casing then diverted downwards in a U shape (12A) in order ultimately to become vertical and coaxial with the casing, **characterized in that** the said casing (1') is made up of a first and of a second part (1'A, 1'B) which are assembled after moulding, the said second part (1'B) being made up of a plug of circular shape closing the said base of the U shape (12A) of the canal and being screwed onto a corresponding screw thread made on the said first part (1'A), and **in that** the said plug is prevented from rotating by the said tamperproofing ring (4).

7. Meter according to the preceding claim, **characterized in that** the said plug (1'B) comprises a radial extension (14) fitted into a groove in the said tamperproofing ring (4).

8. Meter according to Claim 6 or 7, **characterized in that** the said plug (1'B) is welded to the said casing.

9. Meter according to the preceding claim, **characterized in that** the said plug (1'B) is welded to at least two lugs (15) arranged on the said first part (1'A).

10. Meter according to one of the preceding claims, **characterized in that** the said casing (1, 1') is made of plastic.
